(19) Europäisches Patentamt / European Patent Office / Office européen des brevets

(11) **EP 3 159 376 B1**

(12) **EUROPEAN PATENT SPECIFICATION**

(45) Date of publication and mention
of the grant of the patent:
**19.09.2018 Bulletin 2018/38**

(51) Int Cl.:
*C08L 7/00* (2006.01)       *B60C 1/00* (2006.01)
*C08K 3/04* (2006.01)       *C08K 5/103* (2006.01)
*C08K 5/541* (2006.01)       *C08L 9/00* (2006.01)

(21) Application number: **15809983.8**

(22) Date of filing: **17.06.2015**

(86) International application number:
**PCT/JP2015/067471**

(87) International publication number:
**WO 2015/194591 (23.12.2015 Gazette 2015/51)**

(54) **RUBBER COMPOSITION, METHOD FOR PRODUCING SAME, AND TIRE**

KAUTSCHUKZUSAMMENSETZUNG, VERFAHREN ZUR HERSTELLUNG DAVON UND REIFEN

COMPOSITION DE CAOUTCHOUC, SON PROCÉDÉ DE PRODUCTION ET PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.06.2014 JP 2014124633**

(43) Date of publication of application:
**26.04.2017 Bulletin 2017/17**

(73) Proprietor: **Bridgestone Corporation
Tokyo 104-8340 (JP)**

(72) Inventor: **YAMAGISHI, Yasushi
Tokyo 104-8340 (JP)**

(74) Representative: **Lang, Johannes
Bardehle Pagenberg Partnerschaft mbB
Patentanwälte, Rechtsanwälte
Prinzregentenplatz 7
81675 München (DE)**

(56) References cited:
JP-A- 2007 510 768       JP-A- 2009 504 810
JP-A- 2012 512 290       JP-A- 2013 526 622
US-A1- 2009 048 400

• DATABASE WPI Week 201152 Thomson
Scientific, London, GB; AN 2011-J81697
XP002770126, & JP 2011 148898 A (YOKOHAMA
RUBBER CO LTD) 4 August 2011 (2011-08-04)

**Description**

Technical Field

The present invention relates to a rubber composition in which carbon black having a large particle diameter is dispersed to a high degree to thereby enhance workability in unvulcanized stage and which can improve and optimize tire performances, a production process for the same, and a tire produced by using the rubber composition for members.

Background Art

Carbon blacks have so far been used as a reinforcing agent for tires.

Carbon black is produced, for example, by pyrolysis or incomplete combustion method, and in the above methods, fine particles of a nanoscale comprising amorphous carbon account for 95 % or more. At present, a production method of carbon blacks is not limited to the above production methods.

Carbon black having various properties causes a physical interaction with a rubber component, and the interaction thereof is a major factor to exert a reinforcing effect for a tire.

The properties of carbon black which influence the physical interaction include a particle diameter, a surface area, functional groups on a particle surface of carbon black, a structure thereof and the like, and they assume a large role on a reinforcing effect of carbon black.

Among the properties, a particle diameter of carbon black can be changed by a conventional technology, and therefore it shall be practically advantageous if the properties of a tire can be improved by the particle diameter of carbon black.

In general, however, when carbon black is increased in a particle diameter and inevitably decreased in a surface area, it is anticipated that the foregoing physical interaction between carbon black and a rubber component tends to be reduced.

Therefore, why attentions have not so far been paid on improving a reinforcing effect of a tire by using carbon black having a small surface area and a large particle diameter.

On the other hand, it is becoming clear that using glycerin fatty acid ester exerts an influence on dispersion of filler particles in a rubber composition to make it possible to enhance the characteristics of a rubber composition blended with a filler such as silica.

Under such circumstances, technologies in which glycerin fatty acid esters are used in order to improve various properties of a rubber composition in addition to a processability t hereof have been developed in recent years.

Known as a technology for improving a processability and the like in a rubber composition blended with silica as a filler which is prepared by using glycerin fatty acid ester and the like are, for example:

1) a rubber composition improved in an electrostatic property which is prepared by blending 100 parts by weight of a rubber containing 90 parts by weight or more of a diene base rubber with 30 to 120 parts by weight of a filler in which a white filler accounts for 40 % by weight or more, and 0.2 to 8 parts by weight of a nonionic surfactant (refer to, for example, patent document 1), and

2) a rubber composition for a tire tread containing at least one polymer selected from the group of diene base rubbers, and 5 to 100 parts by weight of fine powder non-precipitated silicic acid, 0 to 80 parts by weight of carbon black, and 0.5 to 20 parts by weight of at least one non-aromatic viscosity-reducing substance each based on 100 parts by weight of a rubber contained in the rubber composition,

wherein the non-aromatic viscosity-reducing substance described above is at least one substance selected from the group consisting of glycerin monostearate, sorbitan monostearate, sorbitan monooleate, and trimethylolpropane(2-ethyl-2-hydroxymethyl-1,3-propanediol) (refer to, for example, patent document 2).

A rubber composition in which glycerin fatty acid monoester is blended together with silica as a filler in one of the examples is described in patent document 1 out of patent documents 1 to 2, and it is described therein that an effect of preventing electrification which is different from the effect of the present invention is obtained and that the effect is valid as well for a tire tread part abraded by friction. However, it is neither described nor suggested therein that a viscosity-reducing effect is obtained and that a tire prepared by blending a filler-blended rubber composition blended with glycerin fatty acid monoester is inhibited from being reduced in an abrasion resistance.

Also, a viscosity-reducing effect observed when the tire is blended with glycerin fatty acid monoester together with silica which is a filler is described in the foregoing patent document 2, but it is neither described nor suggested therein whether or not a tire prepared by blending a filler-blended rubber composition blended with the glycerin fatty acid monoester allows an abrasion resistance to be consistent with a viscosity-reducing effect.

In patent document 3, glycerin fatty acid ester, especially glycerin fatty acid triester is used to improve an abrasion resistance and the like of a snow tire. However, it is neither described nor suggested as well in the above patent document that carbon black having a large particle diameter and a small surface area is used to improve the characteristics of the tire.

Related Art Documents

Patent documents

Patent document 1: International Publication WO95/31888 (claims, examples and others)
Patent document 2: Japanese Patent Application Laid-Open No. Hei.9-118786 (claims, examples and others)
Patent document 3: Published Japanese translation of PCT international publication for patent application No. 2005-537369 (claims, examples and others)

Disclosure of the Invention

Problems to be solved by the invention

The present invention intends to solve the problems on the conventional technologies described above and the like. That is, an object of the present invention is to provide a rubber composition in which a processability, an abrasion resistance and a rolling resistance can be consistent well to a high degree in the tire, and parts and members for tires.
In addition to the above, an object of the present invention is to provide a rubber composition in which a ratio of glycerin fatty acid monoester in glycerin fatty acid ester is changed to thereby inhibit a shrink of the rubber composition or further improve the characteristics thereof such as a processability, a rolling resistance and an abrasion resistance.

Means for solving the problems

In the light of the problems on the conventional technologies described above and the like, intense investigations have been repeated by the present inventors to result in finding that a rubber composition which meets the objects described above and which is enhanced in abrasion resistance, rolling resistance and processability, and a tire prepared by using the above rubber composition are obtained by improving dispersibility of carbon black having a large particle diameter in the rubber composition to thereby reduce viscosity of the unvulcanized rubber composition and enhance processability thereof, blending 90 to 130 parts by weight of the carbon black having a large particle diameter (nitrogen adsorption specific surface area: 95 $m^2$/g or less) based on 100 parts by mass of the rubber component, and blending glycerin fatty acid ester.
That is, the present invention resides in the following items (1) to (15).

(1) A rubber composition prepared by blending at least one rubber component selected from a natural rubber and/or a diene base synthetic rubber with carbon black and a glycerin fatty acid ester composition, wherein the carbon black has a nitrogen adsorption specific surface area of 75 to 90 $m^2$/g; 90 to 130 parts by mass of the carbon black based on 100 parts by mass of the rubber component is blended; and a blend amount of the glycerin fatty acid ester composition is 0.5 to 15 parts by mass based on 100 parts by mass of the rubber component.
(2) The rubber composition as described in the above item (1), wherein the glycerin fatty acid ester composition contains glycerin fatty acid monoester and glycerin fatty acid diester, and a content of the glycerin fatty acid monoester in the glycerin fatty acid ester composition is 35 to 85 % by mass.
(3) The rubber composition as described in the above item (1) or (2), wherein a blend amount of the glycerin fatty acid ester composition is 1.0 to 2.5 parts by mass based on 100 parts by mass of the carbon black.
(4) The rubber composition as described in the above item (1), wherein the glycerin fatty acid ester composition contains the glycerin fatty acid monoester, and a content of the glycerin fatty acid monoester in the glycerin fatty acid ester composition is 85 to 100 % by mass in terms of a mass ratio.
(5) The rubber composition as described in the above item (2), wherein the glycerin fatty acid monoester is an ester of glycerin and two or more kinds of fatty acids, and the most fatty acid component among two or more kinds of the fatty acids constituting the glycerin fatty acid ester accounts for 10 to 90 % by mass based on the whole fatty acids.
(6) The rubber composition as described in any one of the above items (1) to (5), obtained by blending at least one rubber component selected from the natural rubber and/or the diene base synthetic rubber with the carbon black and the glycerin fatty acid ester composition and then kneading the mixture.

(7) The rubber composition as described in any one of the above items (1) to (6), further blended with a silane coupling agent.

(8) The rubber composition as described in any one of the above items (1) to (7), wherein the natural rubber and/or the diene base synthetic rubber contains at least one natural rubber, at least one styrene-butadiene copolymer rubber and at least one polybutadiene rubber.

(9) The rubber composition as described in any one of the above items (1) to (8), wherein a reaction solution of a reaction for a systhesis of a glycerin fatty acid ester is used as the glycerin fatty acid ester composition containing the glycerin fatty acid monoester.

(10) A production process for a rubber composition comprising a natural rubber and/or diene base rubber component, a glycerin fatty acid ester composition containing glycerin fatty acid monoester, and carbon black, wherein the carbon black has a nitrogen adsorption specific surface area of 75 to 90 $m^2/g$, and 90 to 130 parts by mass of the carbon black based on 100 parts by mass of the rubber component is contained in the rubber composition.

(11) The production process for a rubber composition as described in the above item (10), wherein a reaction solution of a reaction for a synthesis of a glycerin fatty acid ester is used as the glycerin fatty acid ester composition containing the glycerin fatty acid monoester.

(12) The production process for a rubber composition as described in the above item (11), wherein the glycerin fatty acid ester composition containing the glycerin fatty acid monoester is prepared by the reaction for the synthesis of the glycerin fatty acid ester in which an amount of the glycerin fatty acid monoester is controlled.

(13) A tire produced by using the rubber composition as described in any one of the above items (1) to (9) for members.

(14) A tire for passenger cars produced by using the rubber composition as described in any one of the above items (1) to (9) for a tread member.

(15) A tire produced by using parts or members produced by using the production process for a rubber composition as described in the above items (10) to (12).

Effect of the invention

According to the present invention, use of a glycerin fatty acid ester composition in a rubber blended with a large amount of carbon black having a large particle diameter which has so far been hard to be used in tires due to high generation of heat has made it possible to carry out at the same time using carbon black having a large particle diameter, blending carbon black in a large amount and dispersing carbon black to a high degree in a rubber composition after vulcanization. This has made it possible to provide a rubber composition in which an abrasion resistance can be consistent well with rolling resistance and in which processability can be secured as well by reducing viscosity.

Also, according to the present invention, it has become possible to inhibit shrink of a rubber composition in addition to the above by regulating a ratio of glycerin fatty acid monoester in a glycerin fatty acid ester composition.

MODE FOR CARRYING OUT THE INVENTION

The rubber composition according to the present invention comprises a natural rubber and/or diene base rubber component, a glycerin fatty acid ester composition and carbon black, wherein the carbon black has a nitrogen adsorption specific surface area of 75 to 90 $m^2/g$, and 90 to 130 parts by mass of the carbon black based on 100 parts by mass of the rubber component is contained.

The embodiment of the present invention shall be explained below in detail.

Rubber component:

The rubber component used for the rubber composition according to the present invention comprises a natural rubber and/or a diene base synthetic rubber. In this connection, the natural rubber (NR) includes RSS, TSR#10, TSR#20 and the like which are usually used for tires, and in addition thereto, the natural rubber includes a viscosity stabilizer-containing natural rubber, a high purified natural rubber, an enzyme-treated natural rubber, a saponification-treated natural rubber and the like. Capable of being used as the viscosity stabilizer are, for example, hydroxylamine sulfate, semicarbazide ($NH_2NHCONH_2$) or salts thereof, hydroxylamine, hydrazide compounds (for example, propionic acid hydrazide) and the like. The high purified natural rubber is obtained, for example, by subjecting a natural rubber latex to centrifugal separation to remove non-rubber components such as protein and the like. The enzyme-treated natural rubber is obtained by subjecting a natural rubber to enzyme treatment with enzymes such as protease, lipase, phospholipase and the like. The saponification-treated natural rubber is obtained by subjecting a natural rubber to saponification treatment with alkalis (for example, NaOH) and the like.

The diene base synthetic rubber includes, for example, polyisoprene rubbers (IR), polybutadiene rubbers (BR), styrene-butadiene copolymer rubbers (SBR), butyl rubbers (IIR), and the like. The above diene base synthetic rubbers may be modified polymers or may be used by blending diene base synthetic rubbers (non-modified polymers) with modified polymers.

The above rubber components may be used alone or in a blend of two or more kinds thereof.

Carbon black:

Carbon black which can be used in the present invention shall not specifically be limited, and grades such as, for example, FEF, SRF, HAF, ISAF, SAF and the like can be used alone or in combination of two or more kinds thereof.

A blend amount of these carbon blacks is preferably 90 to 130 parts by mass based on 100 parts by mass of the rubber component described above. A blend amount of the carbon blacks is preferably 130 parts by mass or less from the viewpoint of inhibiting the heat generating property.

The carbon black has a nitrogen adsorption specific surface area of 70 to 95 $m^2/g$, preferably 75 to 90 $m^2/g$.

Also, the carbon black used in the present invention is not limited in a production method.

Further, the carbon black used in the present invention may be changed in a particle diameter, a surface area, functional groups on a particle surface, a structure, and various properties by modification carried out by various reactions such as a catalytic reaction and the like, and physical treatments.

Glycerin fatty acid ester composition:

The glycerin fatty acid ester in the glycerin fatty acid ester composition is obtained by subjecting at least one of three OH groups of glycerin to ester bonding with fatty acid (having 8 to 28 carbon atoms), and The glycerin fatty acid ester is classified into glycerin fatty acid monoester, glycerin fatty acid diester and glycerin fatty acid triester according to the number of the fatty acids bonded to glycerin.

The glycerin fatty acid ester composition used in the present invention contains glycerin fatty acid monoester and glycerin fatty acid diester, and in addition thereto, it may contain glycerin fatty acid triester and glycerin.

In the present invention, the fatty acid constituting the glycerin fatty acid ester has 8 or more carbon atoms, preferably 10 or more carbon atoms, more preferably 12 or more carbon atoms and further preferably 16 or more carbon atoms from the viewpoint of reducing a viscosity of the unvulcanized rubber, and the fatty acid has 28 or less carbon atoms, preferably 22 or less carbon atoms and more preferably 18 or less carbon atoms from the viewpoint of enhancing the heat resistance. The fatty acid constituting the glycerin fatty acid ester is fatty acid having 8 to 28 carbon atoms, preferably 8 to 22 carbon atoms, further preferably 10 to 18 carbon atoms and further more preferably 12 to 18 carbon atoms from the viewpoints of improving the processability by reducing viscosity of the unvulcanized rubber composition, inhibiting the shrinkage and enhancing the heat resistance. Also, the fatty acid may be any of saturated, unsaturated, linear and branched ones, and linear saturated fatty acids are particularly preferred. The specific examples of the fatty acid include capric acid, lauric acid, myristic acid, palmitic acid, stearic acid, isostearic acid, oleic acid, linoleic acid, and the like. preferably lauric acid, palmitic acid and stearic acid are preferable, and palmitic acid and stearic acid are particularly preferable.

Fatty acids having less than 8 carbon atoms have a low affinity with polymers and are liable to cause blooming. On the other hand, fatty acids having 28 or more carbon atoms are not different from fatty acids having 28 or less carbon atoms in an effect of improving the processability and elevate the cost, and therefore they are not preferred.

The glycerin fatty acid ester composition used in the present invention may have substituents as long as they do not deviate from the scope of the present invention.

In the glycerin fatty acid ester composition used in the present invention, the fatty acid has 8 to 28 carbon atoms, and the glycerin fatty acid ester contains glycerin fatty acid monoester and glycerin fatty acid diester. Blending of the above glycerin fatty acid ester composition makes it possible to inhibit the shrinkage and the rubber scorch, enhance the processability by reducing viscosity of the carbon black-blended unvulcanized rubber without delaying the vulcanization rate and achieve various performances such as the heat resistance and the like to a high degree.

In the present invention, the glycerin fatty acid ester composition having a high content of monoester causes the large shrink and raises concerns about the workability, and therefore solving means described later have to be adopted. Also, it tends to reduce a heat resistance of the vulcanized rubber to a large extent.

Accordingly, a content of the monoester in the glycerin fatty acid ester composition is preferably 35 % by mass or more, more preferably 40 % by mass or more, further preferably 45 % by mass or more and further more preferably 50 % by mass or more from the viewpoint of reducing viscosity of the unvulcanized rubber, and the content is preferably 80 % by mass or less, more preferably 75 % by mass or less, 35 to 100 % by mass, preferably 35 to 85 % by mass, more preferably 40 to 85 % by mass, further preferably 45 to 85 % by mass, further more preferably 50 to 85 % by mass, further preferably 50 to 80 % by mass and further more preferably 50 to 75 % by mass.

A content of the glycerin fatty acid diester in the glycerin fatty acid ester composition is preferably 10 % by mass or more, further preferably 15 % by mass or more and further more preferably 20 % by mass or more from the viewpoints of inhibiting the shrink, controlling the scorch and improving the heat resistance, and from the viewpoint of reducing a viscosity of the unvulcanized rubber, the content is preferably 65 % by mass or less, more preferably 55 % by mass or less, further preferably 50 % by mass or less, preferably 10 to 65 % by mass, more preferably 15 to 55 % by mass, further preferably 15 to 50 % by mass and further more preferably 20 to 50 % by mass.

A mass ratio of the glycerin fatty acid monoester/the glycerin fatty acid diester in the composition described above is preferably 0.5 or more, more preferably 0.8 or more, further preferably 0.9 or more and further more preferably 1.0 or more from the viewpoint of reducing a viscosity of the unvulcanized rubber, and the mass ratio is preferably 10 or less, more preferably 8 or less, further preferably 6 or less, further more preferably 5 or less, further preferably 4 or less and further more preferably 3 or less from the viewpoints of inhibiting the shrink, controlling the scorch and improving the heat resistance.

A content of the glycerin fatty acid triester in the glycerin fatty acid ester composition is preferably 10 % by mass or less, more preferably 5 % by mass or less and further preferably 3 % by mass or less from the viewpoint of preventing the rubber after vulcanized from being excessively reduced in physical properties (reduction in the storage elastic modulus, and the like), and the content may be 0.3 % by mass or more from the viewpoint of the productivity.

A total content of the glycerin fatty acid diester and the glycerin fatty acid triester in the glycerin fatty acid ester composition is preferably 15 to 50 % by mass, more preferably 17 to 50 % by mass from the viewpoints of reducing viscosity of the unvulcanized rubber, inhibiting the shrink and improving the heat resistance.

In particular, the glycerin fatty acid ester composition in which a content of the glycerin fatty acid monoester is 50 to 85 % by mass and in which a total content of the glycerin fatty acid diester and the glycerin fatty acid triester is 15 to 50 % by mass is preferred from the viewpoints of reducing viscosity of the unvulcanized rubber, inhibiting the shrink, controlling the scorch and improving the heat resistance, and the glycerin fatty acid ester composition in which a content of the glycerin fatty acid monoester is 50 to 80 % by mass and in which a total content of the glycerin fatty acid diester and the glycerin fatty acid triester is 17 to 50 % by mass is further preferred. Also, the glycerin fatty acid ester composition in which a content of the glycerin fatty acid monoester is 50 to 85 % by mass and in which a content of the glycerin fatty acid diester is 15 to 50 % by mass is preferred, and the glycerin fatty acid ester composition in which a content of the glycerin fatty acid monoester is 50 to 80 % by mass and in which a content of the glycerin fatty acid diester is 20 to 50 % by mass is further preferred.

In this regard, when the problem of shrink can be solved by other solving means, a content of the monoester component in the glycerin fatty acid ester composition is 50 to 100 % by mass, preferably 60 to 99 % by mass, and more preferably 85 to 98 % by mass. In this case, the silica-blended rubber composition can be further improved in processability, rolling resistance and abrasion resistance, and it is preferred as well from the viewpoint of the production.

In producing the glycerin fatty acid ester composition used in the present invention, glycerin remains as an unreacted raw material in a certain case. A content of the glycerin in the glycerin fatty acid ester composition is preferably 10 % by mass or less, more preferably 5 % by mass or less and further preferably 3 % by mass or less from the viewpoint of inhibiting a reduction in the heat resistance, and the content may be 0.3 % by mass or more from the viewpoint of the productivity.

Two or more kinds of the glycerin fatty acid ester compositions which are different in a content of the glycerin fatty acid monoester and a content of the glycerin fatty acid diester may be used.

Further, the glycerin fatty acid ester composition described above is an ester of glycerin and two or more kinds of fatty acids, and the most fatty acid component among two or more kinds of the fatty acids constituting the glycerin fatty acid ester accounts preferably for 10 to 90 % by mass based on the whole fatty acids. Blending the glycerin fatty acid ester composition and the silica having a BET specific surface area of 100 $m^2/g$ or more and 130 $m^2/g$ or less makes it possible to improve abrasion resistance, rolling resistance and processability of the silica-blended rubber composition.

In this respect, the fatty acid component is regarded as one component every fatty acid which is the same in a stereo configuration and a bonding state in addition to an alkyl carbon number, that is, every stereoisomer. In the case of, for example, fatty acids having the same carbon atom number of 18, n-1-octadecanoic acid (normal linear stearic acid), 2-octyl-1-decanoic acid (stearic acid branched in a 2-position), cis-9-octadecenoic acid (normal oleic acid), cis,cis-9,12-octadecadienoic acid (normal linoleic acid), and the like are regarded as different components.

Also, a mass ratio of two or more kinds of the fatty acids described above is 10 to 90 % by mass based on the whole fatty acids even in a case of the most fatty acid component, and the mass ratio is preferably 15 to 80 % by mass, more preferably 20 to 70 % by mass and further more preferably 30 to 60 % by mass from the viewpoint of further improving processability, rolling resistance and abrasion resistance of the rubber composition. In this case, the silica-blended rubber composition can be further improved in abrasion property, rolling resistance and processability.

The glycerin fatty acid ester composition used in the present invention can be produced by an esterification method in which the glycerin fatty acid ester composition is produced from glycerin and fatty acids obtained by decomposing oils and fats and a transesterification method in which the glycerin fatty acid ester composition is produced by using oils and fats and glycerin as raw materials, and a method for producing the glycerin fatty acid ester composition in which an amount of monoester is controlled includes the respective methods of 1) to 3) shown below:

1) A method in which an equilibrium composition of esterification is controlled by changing a charge ratio of a fatty acid component and a glycerin component in the esterification method and the transesterification method each described above. Glycerin can be removed by further distilling. Provided that an upper limit amount of the glycerin fatty acid monoester is considered to be about 65 % by mass in the light of the reaction characteristics.

2) A method in which reaction products obtained by the esterification method and the transesterification method are further fractionated and distilled by molecular distillation to obtain glycerin fatty acid monoester of a high purity (usually 95 % by mass or more).

3) A method in which the high purity glycerin fatty acid monoester obtained by the method of 2) described above and the middle purity glycerin fatty acid monoester obtained by the method of 1) are mixed in an optional ratio to thereby obtain glycerin fatty acid monoester of a relatively high purity region (about 65 to 95 % by mass).

Glycerin fatty acid esters which are reduced in an environmental load and the like can be used by using the oils and fats and the fatty acids of the raw materials described above which are derived from natural products.

Further, commercial products in which an amount of monoester is controlled can be used for the glycerin fatty acid ester composition used in the present invention, and the examples of the commercial products include, for example, stearic acid monoglyceride (Leodol MS-60, Excel S-95, manufactured by Kao Corporation) and the like.

In addition, the glycerin fatty acid ester composition used in the present invention may be a reaction solution in a reaction for synthesis of a glycerin fatty acid ester regardless of a commercial product. In the above case, the glycerin fatty acid ester composition may be produced by a reaction in which a monoester amount is controlled.

In the present invention, a monoglyceride content (glycerin fatty acid monoester content) in the glycerin fatty acid ester composition shows a value determined according to the following equation (I) by GPC (gel permeation chromatography) analysis, and the content means an area ratio of monoglyceride to a sum of glycerin, monoglyceride, diglyceride (glycerin fatty acid diester) and triglyceride (glycerin fatty acid triester) in the GPC analysis:

[Math 1]

$$\text{monoglyceride content (area \%)} = \frac{MG}{[G + MG + DG + TG]} \times 100 \qquad (I)$$

in the equation (I) described above, G is a glycerin area in GPC; MG is a monoglyceride area in GPC; DG is a diglyceride area in GPC; and TG is a triglyceride area in GPC.

The measuring conditions of GPC are shown below.

Measuring conditions of GPC

The GPC was measured by means of the following measuring equipment, and THF (tetrahydrofuran) as an eluent was caused to flow at a flow rate of 0.6 ml/minute to stabilize a column in a thermostatic bath of 40°C. A sample solution 10 $\mu$l of 1 % by mass prepared by dissolving the sample in THF was injected into the column to measure GPC.

Standard substance: monodispersed polystyrene
Detector: RI-8022 (manufactured by Tosoh Corporation)
Measuring equipment: HPLC-8220 GPC (manufactured by Tosoh Corporation)
Analytical column: two columns of TSK-GEL SUPER H1000 and two columns of TSK-GEL SUPER H2000 (manufactured by Tosoh Corporation) which were connected in series

Similarly, a content of the diglyceride in the glycerin fatty acid ester composition means an area ratio of diglyceride to a sum of glycerin, monoglyceride, diglyceride and triglyceride in the GPC analysis.

The examples of the glycerin fatty acid ester composition in which an amount of usable monoester is controlled include, for example, a glyceryl caprylate-containing composition in which fatty acid has 8 carbon atoms, a glyceryl decanoate-containing composition in which fatty acid has 10 carbon atoms, a glyceryl laurate-containing composition in which fatty acid has 12 carbon atoms, a glyceryl myristate-containing composition in which fatty acid has 14 carbon atoms, a glyceryl palmitate-containing composition in which fatty acid has 16 carbon atoms, a glyceryl stearate-containing composition in which fatty acid has 18 carbon atoms, a glyceryl behenate-containing composition in which fatty acid has 22 carbon atoms, and a glyceryl montanate-containing composition in which fatty acid has 28 carbon atoms, and among the glycerin fatty acid ester composition, preferred are the glyceryl laurate-containing composition, the glyceryl palmitate-containing composition and the glyceryl stearate-containing composition are preferred. The above glycerin fatty acid ester compositions in which an amount of monoester is controlled are optionally selected alone or in a mixture of two or more kinds thereof and blended.

A blend amount of the glycerin fatty acid ester composition used in the present invention is preferably 0.5 part by mass or more, more preferably 1 part by mass or more, further preferably 1.5 part by mass or more, further preferably 2 parts by mass or more and further more preferably 3 parts by mass or more based on 100 parts by mass of the rubber component from the viewpoint of reducing a viscosity of the unvulcanized rubber composition, and the blend blend amount is preferably 15 parts by mass or less, more preferably 10 parts by mass or less, further preferably 8 parts by mass or less, preferably 0.5 to 15 parts by mass, more preferably 1 to 10 parts by mass, further preferably 2 to 10 parts by mass, further more preferably 3 to 10 parts by mass, and further more preferably 3 to 8 parts by mass from the viewpoints of inhibiting the rubber physical properties after vulcanized from being excessively reduced (reduction in the storage elastic modulus and the like), controlling the scorch and inhibiting the shrink.

Also, a blend amount of the glycerin fatty acid ester composition is preferably 0.5 part by mass or more, more preferably 0.8 part by mass or more, further preferably 1.0 part by mass or more and further more preferably 1.2 part by mass or more based on 100 parts by mass of the carbon black from the viewpoint of reducing a viscosity of the unvulcanized rubber composition, and the blend amount is preferably 15 parts by mass or less, more preferably 5 parts by mass or less, further preferably 2.5 parts by mass or less, further more preferably 1.5 part by mass or less, preferably 0.5 to 15 parts by mass, more preferably 0.8 to 5 parts by mass, further more preferably 1.0 to 2.5 parts by mass, and further more preferably 1.2 to 1.5 part by mass from the viewpoint of inhibiting the rubber physical properties after vulcanized from being excessively reduced (reduction in the storage elastic modulus and the like).

Silica:

The silica which can be used for the rubber composition according to the present invention shall not specifically be restricted, and commercial products used for rubber compositions can be used. Among silica, wet silica (hydrous silicic acid), dry silica (anhydrous silicic acid), colloidal silica, and the like can be used, and particularly the wet silica is preferably used.

Also, a nitrogen adsorption specific surface area of the silica used in the present invention shall not specifically be restricted. However, using the silica having a nitrogen adsorption specific surface area of 80 to 130 $m^2/g$, preferably 100 to 130 $m^2/g$ provides the possibility to interact the silica with glycerin fatty acid ester to cause the abrasion resistance, the rolling resistance and the processability to be consistent, and the synergistic effect is expected.

Accordingly, when the synergistic effect described above is expected, the nitrogen adsorption specific surface area is preferably 130 $m^2/g$ or less from the viewpoint that the effects of the present invention are liable to be exerted when the silica has a relatively large particle diameter, and the nitrogen adsorption specific surface area is preferably 80 $m^2/g$ or more, more preferably 100 $m^2/g$ or more from the viewpoint that the abrasion resistance is notably reduced when the silica has a too large particle diameter.

In the present invention, the nitrogen adsorption specific surface area is a value measured according to ASTM D3037-88.

A blend amount of the silica shall not specifically be restricted. The blend amount may be added either in a blend amount usually added in conventional technologies or, if possible, in a high blend amount from the viewpoint of the processability and the like.

Silane coupling agent:

In the present invention, a silane coupling agent is preferably used from the viewpoint of the reinforcing property.

The silane coupling agent which can be used shall not specifically be restricted and includes, for example, at least one of bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-nitropropyltrimethoxysilane, 3-nitropropyltriethoxysilane, 3-chloropropyltrimethoxysilane, 3-chloropropyltriethoxysilane, 2-chloroethyltrimethoxysilane, 2-chloroethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazole tetrasulfide, 3-triethoxysilylpropylbenzothiazole tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, 3-nitropropyldimethoxymethylsilane, 3-chloropyldimethoxymethylsilane, dimethoxymethylsilylpropyl-N,N-dimethylthiocarbamoyl tetrasulfide, dimethoxymethylsilylpropylbenzothiazole tetrasulfide, and the like.

A blend amount of the silane coupling agent is, though varied according to a blend amount of the silica, preferably 1 part by mass or more, more preferably 4 parts by mass or more based on 100 parts by mass of the silica from the viewpoint of the reinforcing property, and on the other hand, from the viewpoint of maintaining the heat generating property, the blend amount is preferably 20 parts by mass or less, more preferably 12 parts by mass or less. The blend amount of the silane coupling agent is preferably 1 to 20 parts by mass based on 100 parts by mass of the silica, and the blend amount is more preferably 4 to 12 parts by mass from the viewpoint of the heat generating property.

Rubber composition:

The rubber composition according to the present invention comprises a natural rubber and/or diene base rubber component, a glycerin fatty acid ester composition containing glycerin fatty acid monoester, and carbon black, wherein the carbon black described above has a nitrogen adsorption specific surface area of 75 to 90 m$^2$/g, and the rubber composition contains the carbon black in a blend amount as high as 90 to 130 parts by mass or more based on 100 parts by mass of the rubber component.

The rubber composition according to the present invention can be blended with the rubber component, the carbon black and the glycerin fatty acid ester in which an amount of monoester is controlled, each of which is described above, and in addition thereto, fillers such as the silica and the like described above, and various blend agents which are usually used in the rubber industry, for example, antioxidants, softening agents, stearic acid, zinc oxide, vulcanization accelerators, vulcanization accelerator aids, vulcanizing agents, and the like can suitably be selected and blended therewith as long as the objects of the present invention are not retarded. Commercial products can suitably be used as the above blend agents.

Also, the rubber composition according to the present invention is obtained by blending the rubber component, the carbon black and the glycerin fatty acid ester having the characteristics described above, if necessary, with various blend agents suitably selected to obtain a mixture and kneading the mixture. The rubber composition is obtained, for example, by kneading, warming and extruding the mixture described above by means of a kneading equipment such as a roll, an internal mixer and the like, and the rubber composition is vulcanized after fabrication, whereby the rubber composition can suitably be used for applications of tire members of a tire, such as a tire tread, an under tread, a carcass, a sidewall, a bead part and the like.

A blend amount of zinc oxide in the rubber composition according to the present invention is preferably 1.5 part by mass or more, more preferably 2.2 parts by mass or more based on 100 parts by mass of the rubber component from the viewpoints of the vulcanization characteristics and the elastic modulus, and the blend amount is preferably 12.0 parts by mass or less, more preferably 10.0 parts by mass or less from the viewpoint of the breaking strength.

The reasons why the rubber composition thus constituted improves dispersibility of the filler such as the carbon black and the like in the rubber composition, inhibits the rubber scorch, does not retard the vulcanization rate, prevents the processability from being deteriorated by shrinkage, makes it possible to improve the heat resistance and enhances the processability are guessed as follows.

That is, in the rubber composition according to the present invention, at least one of the glycerin fatty acid ester compositions which hydrophobize the surface of the filler such as the carbon black and the like and act as a lubricant is used in a blend system in which at least one rubber component selected from the natural rubber and/or the diene base synthetic rubber is blended with the carbon black, whereby it can be reacted with the carbon black which is a filler, and the rubber composition is further reduced in a viscosity since it has a lubricant action. Also, it is guessed that the shrink property and reduction in the toughness are improved as well by a hydrophobization action of the carbon black, the lubricant action and the plasticizing action. The glycerin fatty acid ester composition in which an amount of monoester is controlled, or the glycerin fatty acid ester composition in which the glycerin fatty acid monoester and the glycerin fatty acid diester are contained in a specific ratio has a higher carbon black hydrophobization effect than those of compositions containing tertiary amines, monoalkanolamides and the like and is reduced in viscosity, and it is decreased in shrink and improved in processability more than the compositions containing the above compounds.

Also, because of a suited hydrophobicity of the glycerin fatty acid ester containing glycerin fatty acid monoester, the filler particles are suitably dispersed in the rubber composition even when the carbon black which is a filler has a large particle diameter. When the carbon black having a large particle diameter is used, a tire produced by using the other dispersant is reduced in an abrasion resistance, but due to the effect described above, the tire produced by using the rubber composition according to the present invention is not observed to be reduced in an abrasion resistance as is the case with the other dispersant.

Further, in the tire produced by using the rubber composition according to the present invention, the carbon black contained in the rubber composition after vulcanized is optimally dispersed due to a suited hydrophobicity of the glycerin fatty acid ester composition containing glycerin fatty acid monoester. This allows flexibility of the rubber after molded to be maintained though the carbon black is blended in a high amount. Accordingly, the tire is increased in an area brought into contact with the ground and provided with a large frictional coefficient on the road surface, whereby the tire is further enhanced in gripping performance.

Tire and production of tire:

A tire can be produced by a usual process using the rubber composition according to the present invention. For example, the rubber composition according to the present invention blended with various blend agents as described above is extruded and processed into a tire member, for example, a member for a tread at an unvulcanized stage, and the member is stuck on a tire under molding by a usual method in a tire molding machine, whereby a green tire is molded. The above green tire is heated and pressed in a vulcanizing machine to prepare a vulcanized tire, whereby a tire having excellent low heat generating property and good low fuel consumption is obtained. In addition, the tire produced by using the rubber composition according to the present invention is excellent as well in productivity because of a good processability of the rubber composition described above.

The tire produced by using the rubber composition according to the present invention shall not specifically be restricted as long as it is applied to vehicles.

The tire produced by using the rubber composition according to the present invention shall not be restricted to pneumatic tires and may be tires which are filled in an inside, and parts for the tire shall meet the conditions of a shape, a structure, a size, a thickness and the like which are used for vehicles.

EXAMPLES

Next, the present invention shall be explained in further details with reference to production examples, examples and comparative examples, but the present invention shall by no means be restricted to the following examples.

A rubber composition and a glycerin fatty acid ester composition which were obtained in Production Example 4, or those obtained by adjusting the compositions thereof were used for the rubber compositions and the glycerin fatty acid ester compositions in Examples 1 to 6, Comparative Examples 1 to 4 and Reference Examples 1 to 4 each shown in Table 1.

The constitutions of the glycerin fatty acid ester compositions were adjusted by mixing the glycerin fatty acid ester compositions in suitable amounts. Also, the constitutions of the glycerin fatty acid ester compositions were adjusted as well by subjecting suitably the glycerin fatty acid ester compositions to molecular distillation.

Production Examples 1 to 9

Glycerin fatty acid ester compositions obtained by the following respective production methods were used. The contents of the respective components of glycerin fatty acid monoester (monoglyceride), glycerin fatty acid diester, glycerin fatty acid triester and glycerin in the respective glycerin fatty acid ester compositions produced were calculated by the methods described above to determine the respective constitutions.

Production of glycerin fatty acid ester compositions:

Production examples of glycerin fatty acid ester compositions which can be used in the present invention shall be shown below in Production Examples 1 to 9.

Production Example 1: glycerin fatty acid ester in which fatty acid has 8 carbon atoms

A 1 L four neck flask equipped with a stirrer, a dehydrating tube-cooling tube, a thermometer and a nitrogen-inlet tube was charged with 450 g of glycerin and 352 g of octanoic acid (Lunac 8-98, manufactured by Kao Corporation) (glycerin/fatty acid (molar ratio) = 2.0), and sodium hydroxide dissolved in a small amount of water was added thereto in an amount of 10 ppm in terms of sodium. Then, the flask was heated up to 240°C in about 1.5 hour under stirring at 400 r/min while causing nitrogen to flow to a space part on the liquid at a rate of 100 ml/minute. After reached 240°C, water was removed while the acid component was refluxed in the flask, and the reaction was continued for 4 hours at the above temperature. A content of the monoglyceride in the product after the reaction was 67 area %.

Subsequently, the reaction mixture was cooled down to 170°C, and glycerin was removed by distilling the mixture at the above temperature under a reduced pressure of 2.7 kPa or less. Further, steam was supplied to the flask at 150°C and 2 kPa for 2 hours. Then, the mixture was subjected to adsorption filtration under applying pressure by means of Zeta Plus 30S (manufactured by CUNO Inc.) to obtain a monoglyceride-containing composition. The composition thus obtained was measured by GPC to thereby determine the constitutions of the respective components.

Production Example 2: glycerin fatty acid ester in which fatty acid has 10 carbon atoms

A glycerin fatty acid ester was produced by carrying out the reaction, removing the glycerin and carrying out the adsorption filtration in the same manners as in Example 1, except that in Example 1 described above, the octanoic acid was changed to an equimolar amount of decanoic acid (Lunac 10-98, manufactured by Kao Corporation). The monoglyceride-containing composition obtained after the adsorption filtration was measured by GPC to thereby determine the constitutions of the respective components.

Production Example 3: glycerin fatty acid ester in which fatty acid has 12 carbon atoms

A glycerin fatty acid ester was produced by carrying out the reaction, removing the glycerin and carrying out the adsorption filtration in the same manners as in Example 1, except that in Example 1 described above, the octanoic acid was changed to an equimolar amount of lauric acid (Lunac L-98, manufactured by Kao Corporation). The monoglyceride-containing composition obtained after the adsorption filtration was measured by GPC to thereby determine the constitutions of the respective components.

Production Example 4: glycerin fatty acid ester in which fatty acid has 16 carbon atoms

The glycerin fatty acid ester compositions used in Examples 4, 13, 19, 23 and 25 to 28 were produced by carrying out the reaction, removing the glycerin and carrying out the adsorption filtration in the same manners as in Example 1, except that in Example 1 described above, the octanoic acid was changed to an equimolar amount of palmitic acid (Lunac P-95, manufactured by Kao Corporation). The monoglyceride-containing composition obtained after the adsorption filtration was measured by GPC to thereby determine the constitutions of the respective components.

Production Example 5: glycerin fatty acid ester in which fatty acid has 16 carbon atoms

A glycerin fatty acid ester was produced by carrying out the reaction, removing the glycerin and carrying out the adsorption filtration in the same manners as in Example 1, except that in Example 1 described above, an amount of the glycerin was changed to 280 g and that the octanoic acid was changed to 520 g of palmitic acid (Lunac P-95, manufactured by Kao Corporation) (glycerin/fatty acid (molar ratio) = 1.5). The monoglyceride-containing composition obtained after the adsorption filtration was measured by GPC to thereby determine the constitutions of the respective components.

Production Example 6: glycerin fatty acid ester in which fatty acid has 16 carbon atoms

A glycerin fatty acid ester was produced by carrying out the reaction, removing the glycerin and carrying out the adsorption filtration in the same manners as in Example 1, except that in Example 1 described above, an amount of the glycerin was changed to 160 g and that the octanoic acid was changed to 657 g of palmitic acid (Lunac P-95, manufactured by Kao Corporation) (glycerin/fatty acid (molar ratio) = 0.67). The monoglyceride-containing composition obtained after the adsorption filtration was measured by GPC to thereby determine the constitutions of the respective components.

Production Example 7: glycerin fatty acid ester in which fatty acid has 18 carbon atoms

A glycerin fatty acid ester was produced by carrying out the reaction, removing the glycerin and carrying out the adsorption filtration in the same manners as in Example 1, except that in Example 1 described above, the octanoic acid was changed to an equimolar amount of stearic acid (Lunac S-98, manufactured by Kao Corporation) The monoglyceride-containing composition obtained after the adsorption filtration was measured by GPC to thereby determine the constitutions of the respective components.

Production Example 8: glycerin fatty acid ester in which fatty acid has 22 carbon atoms

A glycerin fatty acid ester was produced by carrying out the reaction, removing the glycerin and carrying out the adsorption filtration in the same manners as in Example 1, except that in Example 1 described above, the octanoic acid was changed to an equimolar amount of behenic acid (Lunac BA, manufactured by Kao Corporation) The monoglyceride-containing composition obtained after the adsorption filtration was measured by GPC to thereby determine the constitutions of the respective components.

Production Example 9: glycerin fatty acid ester in which fatty acid has 28 carbon atoms

A glycerin fatty acid ester was produced by carrying out the reaction, removing the glycerin and carrying out the adsorption filtration in the same manners as in Example 1, except that in Example 1 described above, the octanoic acid was changed to an equimolar amount of montanoic acid (octacosanoic acid, manufactured by Tokyo Chemical Industry Co., Ltd.). The monoglyceride-containing composition obtained after the adsorption filtration was measured by GPC to thereby determine the constitutions of the respective components.

Preparation of rubber compositions:

Rubber compositions were prepared by an ordinary method according to blend prescriptions shown in the following Table 1. Numerical values shown in columns below the column of the glycerin fatty acid ester in Tables 1 to 2 are shown by mass parts.

The respective rubber compositions thus obtained were used to measure abrasion resistance, rolling resistance and processability by the following measuring methods.

The results thereof are shown in the following Table 1. The rubber compositions obtained in Examples 1, 4 and 6 shown in Table 1 were used to evaluate and compare a shrink, and the results thereof are shown in Table 2.

Table 1

| Constitution of rubber composition and evaluation of tire performances | | | | | | | | | | | | | | |
|---|---|---|---|---|---|---|---|---|---|---|---|---|---|---|
| | Comparative Example[1] | | | | Example[1] | | | | | | Reference Example | | | |
| | 1 | 2 | 3 | 4 | 1 | 2 | 3 | 4 | 5 | 6 | 1[2] | 2[2] | 3[3] | 4[3] |
| Natural rubber *1 | 30 | 30 | 30 | 30 | 30 | 30 | 30 | 30 | 30 | 30 | 30 | 30 | 30 | 30 |
| SBR *2 | 50 | 50 | 50 | 50 | 50 | 50 | 50 | 50 | 50 | 50 | 50 | 50 | 50 | 50 |
| BR *3 | 20 | 20 | 20 | 20 | 20 | 20 | 20 | 20 | 20 | 20 | 20 | 20 | 20 | 20 |
| Silica *4 | 15 | 15 | 15 | 15 | 15 | 15 | 15 | 15 | 15 | 15 | 15 | 15 | 15 | 15 |
| Carbon black (SAF, surface area: 142) *5 | 100 | 100 | | | | | | | | | | | | |
| Carbon black (HAF, surface area: 79) *6 | | | 100 | | 100 | 115 | 130 | 100 | | 100 | 85 | 85 | 135 | 135 |
| Carbon black (HAF-LS, surface area: 84) *7 | | | | | | | | | 100 | | | | | |
| Carbon black (ISAF-HS, surface area: 99) *8 | | | | 100 | | | | | | | | | | |
| Glycerin fatty acid ester (part by weight) | 0 | 1.5 | 0 | 1.5 | 1.5 | 1.5 | 1.5 | 2.5 | 1.5 | 1.5 | 0 | 1.5 | 0 | 1.5 |
| Glycerin fatty acid monoester (% by mass) | | 73 | | 73 | 73 | 73 | 73 | 84 | 73 | 90 | | | 73 | | 73 |
| Glycerin fatty acid diester (% by mass) | | 25 | | 25 | 25 | 25 | 25 | 14 | 25 | 9 | | 25 | | 25 |
| Glycerin fatty acid triester (% by mass) | | 1 | | 1 | 1 | 1 | 1 | 1 | 1 | 0.5 | | 1 | | 1 |
| Glycerin (% by mass) | | 1 | | 1 | 1 | 1 | 1 | 1 | 1 | 0.5 | | 1 | | 1 |
| Stearic acid | 2 | 2 | 2 | 2 | 2 | 2 | 2 | 2 | 2 | 2 | 2 | 2 | 2 | 2 |
| Zinc oxide | 3 | 3 | 3 | 3 | 3 | 3 | 3 | 3 | 3 | 3 | 3 | 3 | 3 | 3 |
| Wax *9 | 1.5 | 1.5 | 1.5 | 1.5 | 1.5 | 1.5 | 1.5 | 1.5 | 1.5 | 1.5 | 1.5 | 1.5 | 1.5 | 1.5 |
| Antioxidant *10 | 1 | 1 | 1 | 1 | 1 | 1 | 1 | 1 | 1 | 1 | 1 | 1 | 1 | 1 |
| Vulcanization accelerator *11 | 0.8 | 0.8 | 0.8 | 0.8 | 0.8 | 0.8 | 0.8 | 0.8 | 0.8 | 0.8 | 0.8 | 0.8 | 0.8 | 0.8 |
| Silane coupling agent *12 | 1.5 | 1.5 | 1.5 | 1.5 | 1.5 | 1.5 | 1.5 | 1.5 | 1.5 | 1.5 | 1.5 | 1.5 | 1.5 | 1.5 |
| Sulfur | 0.8 | 0.8 | 0.8 | 0.8 | 0.8 | 0.8 | 0.8 | 0.8 | 0.8 | 0.8 | 0.8 | 0.8 | 0.8 | 0.8 |
| Processability (unvulcanized viscosity) | 100 | 100 | 105 | 104 | 110 | 110 | 107 | 115 | 106 | 110 | 100 | 101 | 100 | 103 |
| Abrasion resistance | 100 | 99 | 90 | 89 | 101 | 105 | 110 | 101 | 108 | 100 | 100 | 100 | 100 | 99 |

13

(continued)

| Constitution of rubber composition and evaluation of tire performances | | | | | | | | | | | | | | |
|---|---|---|---|---|---|---|---|---|---|---|---|---|---|---|
| | Comparative Example[1] | | | | Example[1] | | | | | | Reference Example | | | |
| | 1 | 2 | 3 | 4 | 1 | 2 | 3 | 4 | 5 | 6 | 1[2] | 2[2] | 3[3] | 4[3] |
| Rolling resistance | 100 | 100 | 105 | 104 | 110 | 110 | 106 | 112 | 109 | 110 | 100 | 101 | 100 | 102 |
| 1)Processability (unvulcanized viscosity), abrasion resistance and rolling resistance were compared by showing as Comparative Example 1 were set to 100.<br>2)Processability (unvulcanized viscosity), abrasion resistance and rolling resistance were compared by showning as Reference Example 1 were set to 100.<br>3)Processability (unvulcanized viscosity), abrasion resistance and rolling resistance were compared by showing as Reference Example 3 were set to 100.<br>*1 to *12 in Table 1 described above show the followings. | | | | | | | | | | | | | | |

14

The numerical values shown in the constitutions mean parts by weight unless otherwise described.

*1: RSS #3

*2: SBR#1723 (manufactured by JSR Corporation) (rubber component: 100 parts by mass, oil component: 37.5 parts by mass)

*3:BR01 (manufactured by JSR Corporation)

*4: Silica, trade name Nipsil AQ, manufactured by Tosoh Silica Corporation, trade name "Nipsil AQ"

*5: Carbon black, trade name SEAST 9, manufactured by Tokai Carbon Co., Ltd. (nitrogen adsorption specific surface area: 142 m$^2$/g)

*6: Carbon black, trade name SEAST 3, manufactured by Tokai Carbon Co., Ltd. (nitrogen adsorption specific surface area: 79 m$^2$/g)

*7: Carbon black, trade name SEAST 300, manufactured by Tokai Carbon Co., Ltd. (nitrogen adsorption specific surface area: 84 m$^2$/g)

*8: Carbon black, trade name SEAST 5H, manufactured by Tokai Carbon Co., Ltd. (nitrogen adsorption specific surface area: 99 m$^2$/g)

*9: Wax microcrystalline wax, Ozoace 0701 (manufactured by Nippon Seiro Co., Ltd.)

*10: Antioxidant N-(1,3-dimethylbutyl)-N'-phenyl-p-phenylenediamine, trade name: Nocrac 6C, (manufactured by Ouchi Shinko Chemical Industrial Co., Ltd.), or 2,2,4-trimethyl-1,2-dihydroquinoline polymer, trade name: NONFLEX RD-S (manufactured by Seiko Chemical Co., Ltd.)

*11: Vulcanization accelerator diphenylguanidine, trade name: NOCCELER D (manufactured by Ouchi Shinko Chemical Industrial Co., Ltd.), di-2-benzothiazolyl disulfide, trade name: NOCCELER DM (manufactured by Ouchi Shinko Chemical Industrial Co., Ltd.), or N-(tert-butyl)-2-benzothiazolesulfenamide, trade name: Sanceler CM-G (manufactured by Sanshin Chemical Industrial Co., Ltd.)

*12: Silane coupling agent ABC 856 (manufactured by Shin-Etsu Chemical Co., Ltd. ABC-856.)

Table 2

| Relation of constitution of rubber composition and shrink of rubber composition | | | |
|---|---|---|---|
| | Example | | |
| | 6 | 1 | 4 |
| Natural rubber *1 | 30 | 30 | 30 |
| SBR *2 | 50 | 50 | 50 |
| BR *3 | 20 | 20 | 20 |
| Silica *4 | 15 | 15 | 15 |
| Carbon black (SAF, surface area: 142) *5 | | | |
| Carbon black (HAF, surface area: 79) *6 | 100 | 100 | 100 |
| Carbon black (HAF-LS, surface area: 84) *7 | | | |
| Carbon black (ISAF-HS, surface area: 99) *8 | | | |
| Glycerin fatty acid ester (part) | 1.5 | 1.5 | 2.5 |
| Glycerin fatty acid monoester (% by mass) | 90 | 73 | 84 |
| Glycerin fatty acid diester (% by mass) | 9 | 25 | 14 |
| Glycerin fatty acid triester (% by mass) | 0.5 | 1 | 1 |
| Glycerin (% by mass) | 0.5 | 1 | 1 |
| Stearic acid | 2 | 2 | 2 |
| Zinc oxide | 3 | 3 | 3 |
| Wax *9 | 1.5 | 1.5 | 1.5 |
| Antioxidant *10 | 1 | 1 | 1 |
| Vulcanization accelerator *11 | 0.8 | 0.8 | 0.8 |

(continued)

| Relation of constitution of rubber composition and shrink of rubber composition | | | |
|---|---|---|---|
| | Example | | |
| | 6 | 1 | 4 |
| Silane coupling agent *12 | 1.5 | 1.5 | 1.5 |
| Sulfur | 0.8 | 0.8 | 0.8 |
| Shrink[4] | 100 | 89 | 95 |
| 4)Shrink was compared by showing as Example 6 was set to 100. | | | |

The numerical values explaining the constitutions are shown by parts-by-mass unless otherwise described.

*1: RSS #3

*2: SBR#1723 (manufactured by JSR Corporation) (rubber component: 100 parts by mass, oil component: 37.5 parts by mass)

*3:BR01 (manufactured by JSR Corporation)
*4: Silica, trade name Nipsil AQ, manufactured by Tosoh Silica Corporation, trade name "Nipsil AQ"
*5: Carbon black, trade name SEAST 9, manufactured by Tokai Carbon Co., Ltd. (nitrogen adsorption specific surface area: 142 $m^2$/g)
*6: Carbon black, trade name SEAST 3, manufactured by Tokai Carbon Co., Ltd. (nitrogen adsorption specific surface area: 79 $m^2$/g)
*7: Carbon black, trade name SEAST 300, manufactured by Tokai Carbon Co., Ltd. (nitrogen adsorption specific surface area: 84 $m^2$/g)
*8: Carbon black, trade name SEAST 5H, manufactured by Tokai Carbon Co., Ltd. (nitrogen adsorption specific surface area: 99 $m^2$/g)
*9: Wax microcrystalline wax, Ozoace 0701 (manufactured by Nippon Seiro Co., Ltd.)
*10: Antioxidant N-(1,3-dimethylbutyl)-N'-phenyl-p-phenylenediamine, trade name: Nocrac 6C, (manufactured by Ouchi Shinko Chemical Industrial Co., Ltd.), or 2,2,4-trimethyl-1,2-dihydroquinoline polymer, trade name: NONFLEX RD-S (manufactured by Seiko Chemical Co., Ltd.)
*11: Vulcanization accelerator diphenylguanidine, trade name: NOCCELER D (manufactured by Ouchi Shinko Chemical Industrial Co., Ltd.), di-2-benzothiazolyl disulfide, trade name: NOCCELER DM (manufactured by Ouchi Shinko Chemical Industrial Co., Ltd.), or N-(tert-butyl)-2-benzothiazolesulfenamide, trade name: Sanceler CM-G (manufactured by Sanshin Chemical Industrial Co., Ltd.)
*12: Silane coupling agent, ABC 856 (manufactured by Shin-Etsu Chemical Co., Ltd. ABC-856.)

Production process for rubber composition:

Mixing and kneading methods of the respective components blended with the rubber composition in the production process for the rubber composition according to the present invention shall not specifically be restricted. Also, according to the present invention, the components can be mixed, kneaded and vulcanized by means of apparatuses generally used in the technical field concerned.

Viscosity-reducing method for unvulcanized rubber composition:

Mixing and kneading methods for the respective components blended with the unvulcanized rubber composition in a viscosity-reducing method for the unvulcanized rubber composition according to the present invention shall not specifically be restricted.

Abrasion resistance:

Abrasion resistance test

The tires prepared by using the respective rubber compositions produced in the examples and the comparative examples were used to measure an abrasion resistance by means of a Lambourn abrasion tester, wherein the abrasion amount was shown by the slip rate of 25 %, and the measuring temperature was room temperature. The larger the index is, the better the abrasion resistance is. The value was shown by an index, wherein the value in Comparative Example 1 was set to 100. It is shown that the larger the numerical value is, the larger the abrasion resistance is.

Rolling resistance:

Rolling resistance test

The rolling resistance was measured and evaluated by a meandering property of a tire (195/65R15) in which a tread part was formed by using the respective rubber compositions, wherein the tire was allowed to rotate on a rotating drum having an outer diameter of 1707.6 mm and a width of 350 mm provided with a steel flat surface and at a speed of 80 km/hour under applying a load of 4500 N (460 kg). It is shown that the larger the measured numerical value is, the smaller the rolling resistance is (low fuel consumption), and the value was shown by an index, wherein the value in Comparative Example 1 was set to 100.

Processability:

Processability was shown by a Mooney viscosity of the unvulcanized rubber composition which was measured at $130 \pm 1°C$ by means of an L shaped rotor, and the value was shown by an index, wherein the value in Comparative Example 1 was set to 100.
It is shown that the larger the numerical value is, the better processability is.

Measuring method for shrink:

A rubber obtained by kneading the rubber composition by means of a lab mixer was wound around a roll of 70°C and heated for 3 minutes to obtain a sheet of 5 mm. A difference in a length between immediately after obtaining the sheet and after leaving the sheet standing for 3 hours was measured, and the difference was shown by an index, wherein the value in Example 6 shown in Table 1 was set to 100. It is shown that the larger the value is, the larger and the worse the shrink is.
As apparent from the results shown in Table 1, it has become clear that the rubber compositions prepared in Examples 1 to 6 falling in the scope of the present invention are enhanced in processability and improved as well in an abrasion resistance and a rolling resistance as compared with the rubber compositions prepared in Comparative Examples 1 to 4 falling outside the scope of the present invention.
In the cases of Comparative Examples 1 to 2 in which carbon black having a small particle diameter was blended in a large amount, a balance between the abrasion resistance, the rolling resistance and the processability cannot be improved even by combining with the glycerin fatty acid monoester. In contrast with this, when carbon black having a large particle diameter was blended in a large amount in Examples 1 to 6, the abrasion resistance, the rolling resistance and the processability can be consistent by combining with the glycerin fatty acid monoester.
In Reference Examples 1 to 4, a blend amount of the carbon black used in the present invention was decreased or increased more than the blend amount of the carbon black falling in the range of the present invention. In the above cases, the glycerin fatty acid ester is less effective for enhancing the abrasion resistance, the rolling resistance and the processability.
Also, it has become clear from the results shown in Table 2 that the shrink in Example 1 in which the glycerin fatty acid monoester was contained in a ratio of 73 % by mass is smaller than that in Example 6 in which the glycerin fatty acid monoester was contained in a ratio of 90 % by mass.
It has become clear from the above results that when the glycerin fatty acid monoester is contained, a ratio of the glycerin fatty acid monoester is preferably a certainlevel or lower considering the shrink.

INDUSTRIAL APPLICABILITY

The rubber composition according to the present invention can suitably be used for applications of producing tire members such as tire treads, under treads, carcasses, side walls, bead parts and the like.

**Claims**

**1.** A rubber composition prepared by blending at least one rubber component selected from a natural rubber and/or a diene base synthetic rubber with carbon black and a glycerin fatty acid ester composition,
wherein the carbon black has a nitrogen adsorption specific surface area of 75 to 90 m$^2$/g;
90 to 130 parts by mass of the carbon black based on 100 parts by mass of the rubber component is blended;
and a blend amount of the glycerin fatty acid ester composition is 0.5 to 15 parts by mass based on 100 parts by mass of the rubber component.

2. The rubber composition as described in claim 1, wherein the glycerin fatty acid ester composition contains glycerin fatty acid monoester and glycerin fatty acid diester, and a content of the glycerin fatty acid monoester in the glycerin fatty acid ester composition is 35 to 85 % by mass.

3. The rubber composition as described in claim 1 or 2, wherein a blend amount of the glycerin fatty acid ester composition is 1.0 to 2.5 parts by mass based on 100 parts by mass of the carbon black.

4. The rubber composition as described in claim 1, wherein the glycerin fatty acid ester composition contains the glycerin fatty acid monoester, and a content of the glycerin fatty acid monoester in the glycerin fatty acid ester composition is 85 to 100 % by mass in terms of a mass ratio.

5. The rubber composition as described in claim 2, wherein the glycerin fatty acid monoester is an ester of glycerin and two or more kinds of fatty acids, and the most fatty acid component among two or more kinds of the fatty acids constituting the glycerin fatty acid ester accounts for 10 to 90 % by mass based on the whole fatty acids.

6. The rubber composition as described in any one of claims 1 to 5, obtained by blending at least one rubber component selected from the natural rubber and/or the diene base synthetic rubber with the carbon black and the glycerin fatty acid ester composition and then kneading the mixture.

7. The rubber composition as described in any one of claims 1 to 6, further blended with a silane coupling agent.

8. The rubber composition as described in any one of claims 1 to 7, wherein the natural rubber and/or the diene base synthetic rubber contains at least one natural rubber, at least one styrene-butadiene copolymer rubber and at least one polybutadiene rubber.

9. The rubber composition as described in any one of claims 2 to 8, wherein a reaction solution of a reaction for a synthesis of a glycerin fatty acid ester is used as the glycerin fatty acid ester composition containing the glycerin fatty acid monoester.

10. A production process for a rubber composition comprising a natural rubber and/or diene base rubber component, a glycerin fatty acid ester composition containing glycerin fatty acid monoester, and carbon black, wherein the carbon black has a nitrogen adsorption specific surface area of 75 to 90 m$^2$/g, and 90 to 130 parts by mass of the carbon black based on 100 parts by mass of the rubber component is contained in the rubber composition.

11. The production process for a rubber composition as described in claim 10, wherein the glycerin fatty acid ester composition containing the glycerin fatty acid monoester is a reaction solution of a reaction for a synthesis of a glycerin fatty acid ester synthetic reaction.

12. The production process for a rubber composition as described in claim 11, wherein the glycerin fatty acid ester composition containing the glycerin fatty acid monoester is prepared by the reaction for the synthesis of the glycerin fatty acid ester in which an amount of the glycerin fatty acid monoester is controlled.

13. A tire produced by using the rubber composition as described in any one of claims 1 to 9 for members.

14. A tire for passenger cars produced by using the rubber composition as described in any one of claims 1 to 9 for a tread member.

15. A tire produced by using parts or members produced by using the production process for a rubber composition as described in claims 10 to 12.

**Patentansprüche**

1. Kautschukzusammensetzung, hergestellt durch Vermischen wenigstens einer Kautschukkomponente ausgewählt aus einem Naturkautschuk und/oder einem Dien-basierten synthetischen Kautschuk mit Ruß (Carbon Black) und einer Glycerinfettsäureester-Zusammensetzung,
   wobei der Ruß eine spezifische Stickstoff-Adsorptions-Oberfläche von 75 bis 90 m$^2$/g aufweist;
   90 bis 130 Massenteile des Rußes, bezogen auf 100 Massenteile der Kautschukkomponente, vermischt werden; und eine Mischmenge der Glycerinfettsäureester-Zusammensetzung 0,5 bis 15 Massenteile, bezogen auf 100 Massenteile der Kautschukkomponente, beträgt.

2. Kautschukzusammensetzung wie in Anspruch 1 beschrieben, wobei die Glycerinfettsäureester-Zusammensetzung Glycerinfettsäuremonoester und Glycerinfettsäurediester enthält, und ein Gehalt des Glycerinfettsäuremonoesters in der Glycerinfettsäureester-Zusammensetzung 35 bis 85 Massen-% beträgt.

3. Kautschukzusammensetzung wie in Anspruch 1 oder 2 beschrieben, wobei eine Mischmenge der Glycerinfettsäureester-Zusammensetzung 1,0 bis 2,5 Massenteile, bezogen auf 100 Massenteile des Rußes, beträgt.

4. Kautschukzusammensetzung wie in Anspruch 1 beschrieben, wobei die Glycerinfettsäureester-Zusammensetzung den Glycerinfettsäuremonoester enthält, und ein Gehalt des Glycerinfettsäuremonoesters in der Glycerinfettsäureester-Zusammensetzung 85 bis 100 Massen-% im Sinne eines Massenverhältnisses beträgt.

5. Kautschukzusammensetzung wie in Anspruch 2 beschrieben, wobei der Glycerinfettsäuremonoester ein Ester von Glycerin und zwei oder mehr Arten von Fettsäuren ist, und die häufigste Fettsäurekomponente unter den zwei oder mehr Arten der Fettsäuren, die den Glycerinfettsäureester darstellen, 10 bis 90 Massen-%, bezogen auf die gesamten Fettsäuren, ausmachen.

6. Kautschukzusammensetzung wie in irgendeinem der Ansprüche 1 bis 5 beschrieben, erhalten durch Vermischen wenigstens einer Kautschukkomponente ausgewählt aus dem Naturkautschuk und/oder dem Dien-basierten synthetischen Kautschuk mit dem Ruß und der Glycerinfettsäureester-Zusammensetzung und dann Kneten des Gemisches.

7. Kautschukzusammensetzung wie in irgendeinem der Ansprüche 1 bis 6 beschrieben, weiter vermischt mit einem Silan-Kupplungsmittel.

8. Kautschukzusammensetzung wie in irgendeinem der Ansprüche 1 bis 7 beschrieben, wobei der Naturkautschuk und/oder der Dien-basierte synthetische Kautschuk wenigstens einen Naturkautschuk, wenigstens einen StyrolButadien-Copolymer-Kautschuk und wenigstens einen Polybutadien-Kautschuk enthält.

9. Kautschukzusammensetzung wie in irgendeinem der Ansprüche 2 bis 8 beschrieben, wobei eine Reaktionslösung einer Umsetzung für eine Synthese eines Glycerinfettsäureesters als die Glycerinfettsäureester-Zusammensetzung, die den Glycerinfettsäuremonoester enthält, verwendet wird.

10. Herstellungsverfahren für eine Kautschukzusammensetzung, umfassend eine Naturkautschuk- und/oder Dien-basierte Kautschukkomponente, eine Glycerinfettsäureester-Zusammensetzung, die Glycerinfettsäuremonoester enthält, und Ruß (Carbon Black), wobei der Ruß eine spezifische Stickstoff-Adsorptions-Oberfläche von 75 bis 90 m$^2$/g aufweist, und 90 bis 130 Massenteile des Rußes, bezogen auf 100 Massenteile der Kautschukkomponente, in der Kautschukzusammensetzung enthalten sind.

11. Herstellungsverfahren für eine Kautschukzusammensetzung wie in Anspruch 10 beschrieben, wobei die Glycerinfettsäureester-Zusammensetzung, die den Glycerinfettsäuremonoester enthält, eine Reaktionslösung einer Umsetzung für eine Synthese einer Glycerinfettsäureester-Synthese-Reaktion ist.

12. Herstellungsverfahren für eine Kautschukzusammensetzung wie in Anspruch 11 beschrieben, wobei die den Glycerinfettsäuremonoester enthaltende Glycerinfettsäureester-Zusammensetzung durch die Umsetzung für die Synthese des Glycerinfettsäureesters, in welcher die Menge des Glycerinfettsäuremonoesters gesteuert wird, hergestellt wird.

13. Reifen, hergestellt unter Verwendung der Kautschukzusammensetzung wie in irgendeinem der Ansprüche 1 bis 9 beschrieben, für Elemente.

**14.** Reifen für Personenkraftfahrzeuge, hergestellt unter Verwendung der Kautschukzusammensetzung wie in irgendeinem der Ansprüche 1 bis 9 beschrieben, für ein Laufflächenelement.

**15.** Reifen, hergestellt durch Verwenden von Teilen oder Elementen hergestellt unter Verwendung des Herstellungsverfahrens für eine Kautschukzusammensetzung wie in den Ansprüchen 10 bis 12 beschrieben.

**Revendications**

**1.** Composition de caoutchouc préparée par mélange d'au moins un composant caoutchouc choisi parmi un caoutchouc naturel et/ou un caoutchouc synthétique à base diénique, avec du noir de carbone et une composition d'un ester d'un acide gras du glycérol,
dans laquelle le noir de carbone présente une aire spécifique, par adsorption d'azote, de 75 à 90 m$^2$/g ; l'opération de mélange porte sur 90 à 130 parties en masse du noir de carbone pour 100 parties en masse du composant caoutchouc ;
et la quantité mélangée de la composition d'un ester d'un acide gras du glycérol est de 0,5 à 15 parties en masse pour 100 parties en masse du composant caoutchouc.

**2.** Composition de caoutchouc selon la revendication 1, dans laquelle la composition d'un ester d'un acide gras du glycérol contient un monoester d'un acide gras du glycérol et un diester d'un acide gras du glycérol, et la teneur de la composition d'un ester d'un acide gras du glycérol en le monoester d'un acide gras du glycérol est de 35 à 85 % en masse.

**3.** Composition de caoutchouc selon la revendication 1 ou 2, dans laquelle la quantité mélangée de la composition d'un ester d'un acide gras du glycérol est de 1,0 à 2,5 parties en masse pour 100 parties en masse du noir de carbone.

**4.** Composition de caoutchouc selon la revendication 1, dans laquelle la composition d'un ester d'un acide gras du glycérol contient le monoester d'un acide gras du glycérol, et la teneur de la composition d'un ester d'un acide gras du glycérol en le monoester d'un acide gras du glycérol est de 85 à 100 % en masse, le rapport étant exprimé en masse.

**5.** Composition de caoutchouc selon la revendication 2, dans laquelle le monoester d'un acide gras du glycérol est un ester du glycérol et de deux types ou plus d'acides gras, et le composant acide le plus gras, parmi deux types ou plus d'acides gras constituant l'ester d'un acide gras du glycérol compte pour 10 à 90 % en masse, par rapport à la totalité des acides gras.

**6.** Composition de caoutchouc selon l'une des revendications 1 à 5, obtenue par mélange d'au moins un composant caoutchouc choisi parmi le caoutchouc naturel et/ou le caoutchouc synthétique à base diénique, avec le noir de carbone et la composition d'un ester d'un acide gras du glycérol, puis malaxage du mélange.

**7.** Composition de caoutchouc selon l'une des revendications 1 à 6, subissant en outre un mélange avec un agent de couplage de type silane.

**8.** Composition de caoutchouc selon l'une des revendications 1 à 7, dans laquelle le caoutchouc naturel et/ou le caoutchouc synthétique à base diénique contient au moins un caoutchouc naturel, au moins un caoutchouc copolymère styrène-butadiène et au moins un caoutchouc polybutadiène.

**9.** Composition de caoutchouc selon l'une des revendications 2 à 8, dans laquelle une solution réactionnelle pour une réaction de synthèse d'un ester d'un acide gras du glycérol est utilisée en tant que composition d'un ester d'un acide gras du glycérol contenant le monoester d'un acide gras du glycérol.

**10.** Procédé de production d'une composition de caoutchouc comprenant un caoutchouc naturel et/ou un composant caoutchouc à base diénique, une composition d'un ester d'un acide gras du glycérol contenant un monoester d'un acide gras du glycérol, et du noir de carbone, dans lequel le noir de carbone présente une aire spécifique par adsorption d'azote de 75 à 90 m$^2$/g, et la composition de caoutchouc contient 90 à 130 parties en masse du noir de carbone pour 100 parties en masse du composant caoutchouc.

**11.** Procédé de production d'une composition de caoutchouc selon la revendication 10, dans lequel la composition d'un ester d'un acide gras du glycérol contenant le monoester d'un acide gras du glycérol est une solution réactionnelle pour une réaction de synthèse assurant une réaction de synthèse d'un ester d'un acide gras du glycérol.

**12.** Procédé de production d'une composition de caoutchouc selon la revendication 11, dans lequel la composition d'un ester d'un acide gras du glycérol contenant le monoester d'un acide gras du glycérol est préparée par la réaction de synthèse de l'ester d'un acide gras du glycérol dans laquelle on procède à une régulation de la quantité du monoester d'un acide gras du glycérol.

**13.** Pneu produit par utilisation de la composition de caoutchouc selon l'une des revendications 1 à 9 pour des éléments.

**14.** Pneu pour des voitures de tourisme, produit par utilisation de la composition de caoutchouc selon l'une des revendications 1 à 9 pour un élément d'une bande de roulement.

**15.** Pneu produit par utilisation de pièces ou d'éléments produits par utilisation du procédé de production d'une composition de caoutchouc selon les revendications 10 à 12.

## REFERENCES CITED IN THE DESCRIPTION

**Patent documents cited in the description**

- WO 9531888 A
- JP HEI9118786 B
- JP 2005537369 W